Europäisches Patentamt

European Patent Office

Office européen des brevets

(11) Publication number: 0 468 092 A1

# EUROPEAN PATENT APPLICATION

(21) Application number: 90122613.4

(22) Date of filing: 27.11.90

(51) Int. Cl.5: G01N 31/00

(30) Priority: 25.07.90 IT 2105490

(43) Date of publication of application:
29.01.92 Bulletin 92/05

(84) Designated Contracting States:
CH DE ES FR GB GR LI SE

(71) Applicant: ALURES S.C.p.A.
Località Portovesme
I-09010 Portoscuso (CA)(IT)

(72) Inventor: Gregu, Franca c/o Alures S.C.p.A.
Località Portovesme
I-09010 Portoscuso CA(IT)

(74) Representative: Trupiano, Roberto
BREVETTI EUROPA S.r.l. Piazza Bernini, 6
I-20133 Milano (MI)(IT)

(54) Process for measuring and controlling the concentration of alumina in the electrolytic cells for aluminum production.

(57) Process for the rapid measurement and control of the concentration of alumina in the electrolytic bath used for the production of primary aluminum, which process consists in mixing a finely ground and metered sample of bath with graphite, heating the so obtained mixture up to a temperature of at least 2050°C in the absence of oxygen and/or oxygen-containing products and quantitatively measuring the content of CO contained in the gases developed by the reaction, which CO is univocally correlated with the concentration of alumina.

Said process is also accomplished in continuous mode, and makes it possible an automated operation of the electrolytic cell to be accomplished.

EP 0 468 092 A1

The subject-matter of the instant invention is a process for measuring and controlling the concentration of alumina ($Al_2O_3$) in the cryolite bath which constitutes the electrolyte of the cells in which primary aluminum is produced, which process makes it possible said alumina concentration to be adjusted and maintained within the range of values within which the highest current efficiencies and the best operating conditions are achieved.

It is well-known that the concentration of alumina in the cryolite bath constitutes an element of basic importance in the operation of the eletrolytic cells used in order to produce primary aluminum. In fact, it is very important, for the productivity of the cell, that the concentration of alumina in the bath does not decrease under the value of 1.5% and does not rise above the value of 6%. In fact, in the first event, the anodic effect would be caused, with the voltage consequently increasing up to extremely high values (from about 4 V up to 3∅ or 4∅ V), and in the second case deposits of alumina on the bottom wall of the cell would be formed which, by partially insulating the cathode, will cause strong horizontal currents to be generated inside the mass of the liquid metal. These currents, by interfering with the magnetic field, will generate disturbances inside the molten metal mass and therefore unstabilities to appear in cell operation. Therefore, continuously knowing the concentration of alumina in the bath is of basic importance, if the operator aims at securing a constant operation of the cell under optimum conditions, by feeding alumina when necessary, and in the due amout. Normally, the feed of alumina to the cryolite bath is carried out in modern facilities by means of metering/feeding devices, with small amounts of alumina being continuously fed through holes made through the crust of cryolite bath.

It is well-known that the technical evolution undergone during the past years by the electrolytic process for the production of aluminum has mostly been due to the development of the control of the electrolytic bath, which is presently carried out by taking advantage of the correlation of some electrical parameters with the concentration of alumina in the same bath, according to sophisticated control processes.

For example, in U.S. patent 4,341,491 (Bonny et al.) a process for controlling and adjusting the concentration of alumina in the electrolytic bath is disclosed, which process substantially consists of regulating the feed of alumina to said bath as a function of the changes in the internal resistance of the cell over preset time intervals, with slower-feed cycles being alternated to faster-feed cycles.

According to another process, which is the subject-matter of Italian patent application N. 19,289 A/89 filed on February 2nd, 1989 to the same Applicant's name, the operating parameters of the electrolytic cell, and namely the interpolar distance and the concentration of alumina in the bath, are substantially controlled and adjusted by periodically feeding, in sequence and at regular time intervals, metered and constant amounts of alumina and correlating the amounts of alumina fed to the bath, and therefore the concentration of alumina in said bath, with the trend of the changes in the cell voltage according to a relation which takes into account, among others, coefficients determined by way of experiments by measuring the changes of concentration overvoltage as a function of alumina concentration in the bath.

From the above, the basic importance clearly appears of being capable of knowing, at any times and at the right moment, the concentration of alumina in the cryolite bath, and of measuring the changes and oscillations of said concentration in connection with the other operating parameters, and with the feed rate of said alumina.

On the other hand, it is well-known that the method consisting in carrying out a chemical analysis of the cryolite bath, which makes it possible alumina content to be measured with reliability, cannot be used at the industrial level in order to check and control the operating parameters of the electrolytic process, in that it mandatorily is a noncontinuous operation which cannot be automated and requires a time of approximately 4 hours to be completed. As a consequence of such matters of fact, it can only supply the required information when the operating conditions have by that time changed, as compared to what they were when the bath sample was drawn in order to be submitted to the chemical analysis.

The purpose of the instant invention is of providing a process which makes it possible the concentration of alumina in the electrolytic bath to be measured with precision and very rapidly, such that said alumina concentration can be constantly kept at the desired value.

Another purpose of the invention is of providing a process which makes it possible the concentration of alumina in the electrolytic bath to be measured with precision also at very low alumina concentrations, and which is directly useable in order to accomplish the processes of check, control and regulation of the operation of the electrolytic cells, which processes exploit the correlations between the parameters of electrical type and alumina concentration.

A further purpose of the present invention is providing a process for measuring the concentration of alumina in the electrolytic bath, which can be automated and/or rendered semicontinuous, and makes it possible the electrolytic process to be carried out by means of an automated procedure.

These, and still further purposes and relevant advantages which can be set forth by the following disclosure, are achieved by a process for the measurement and control of the concentration of alumina ($Al_2O_3$) in the cryolite bath which constitutes the electrolyte in the cells used for the production or primary aluminum, which process, according to the present invention, comprises the following steps:

A. Drawing a sample of the molten cryolite bath from the electrolytic cell by means of a probe of a type known from the prior art, or another equivalent means;

B. cooling said sample down to a temperature lower than 100°C and finely grinding and homogenizing it;

C. drawing an exactly metered amount by means of a volumetric measurement or by weighing said ground and homogenized sample;

D. mixing said metered amount of said sample with an approximately equal amount of a finely ground, carbon-based material selected from graphite and coal, with said carbon-based material being free, and kept free, from oxygen and/or products containing oxygen in any forms or combinations;

E. heating said metered amount of said sample in mixture with said carbon-based material inside a perfectly sealed chamber rigorously free from oxygen and/or products containing oxygen in any forms or combinations, up to a temperature of at least 2050°C, collecting and cooling the generated gases and separating, by means of suitable filters of chemical and/or physical type, of types known from the prior art, the solid and/or condensed particles and any fluorinated gases possibly contained in said developed gases;

F. conveying said generated and filtered gases to a suitable carbon monoxide (CO) detecting apparatus and quantitatively determining said CO content in said gases.

In fact, the present Applicant was able to observe that at the temperature of 2050°C all oxygen contained in alumina $Al_2O_3$ contained in the cryolite bath as such, or also chemically bonded, is quantitatively converted into CO in the presence of carbon-based materials, such as, e.g., graphite, and that from the quantitative determination of such CO one can univocally go back to the amount of $Al_2O_3$ contained in the cryolite bath. For the quantitative determination of CO in said gases, an I.R.-light detector of a type known from the prior art, and commonly available from the market, can be advantageosly used.

In order to heat the sample and to collect the gas according to (E) and (F) steps, an apparatus of the type used, e.g., for the check of free oxygen contained inside high-purity metals can be advantageously used. Such an apparatus substantially consists of a precision balance and an electrical oven capable of reaching within a few seconds temperatures higher than 2000°C. Also such electrical ovens are commonly available from the market.

The fluorinated gases possibly developed together with CO, substantially constituted by hydrogen fluoride, are separated by being absorbed, e.g., on NaOH, so that they cannot flow through the detector and damage it. The amount of sample drawn according to the step (A) is so defined, as to secure that the drawn sample is representative of the cryolite bath; said amount usually is of the order of from 50 to 100 g. On the contrary, the metered amount of sample which is submitted to the heating step is of the order of a few grams, i.e., is usually comprised within the range of from 0.5 to 2 g of material.

The time required for completing the process is of the order of a few minutes, usually of from 2 to 4 minutes, and therefore makes it possible the actual conditions of the electrolytic cell to be verified.

The sequence of the steps which compose the process of the present invention can be carried out in continuous by means of an apparatus installed in the nearby of the electrolytic cell and directly connected both with the alumina feeding devices and with the devices for controlling the anodic distance, so as to make it possible the electrolytic process to be fully automated with the aid of a suitable processor and according to a preset programme.

The process according to the present invention makes it possible the alumina concentration in the electrolytic bath to be determined with the highest precision, with an average deviation which is of 3% when the concentration of alumina in the bath is of order of 1.3%, in practice at the value of the anodic effect, and is of 2%, or even lower than that, when the concentration of alumina is of the order of 2.5%. Thus, the concentration of alumina in the electrolytic bath can be maintained during the electrolysis also at very low values, e.g., of round 2%, i.e., within the range inside which, as it is well-known, the highest current efficiencies can be obtained.

Among the many advantages which are achieved by means of the present invention, the following can be reminded:

- The anodic effects can be strictly controlled, in that their arising is no longer casual, but is controlled and can be scheduled.
- The accumulations of aluminous sludges on the bottom wall of the cells are eliminated.
- The current efficiency is increased.
- The average useful life of the cells is increased, as an indirect consequence of the sludges of aluminum oxide being not formed, with cathodes soiling and insulation therefore not occurring any longer.

## Claims

1. Process for the measurement and control of the concentration of alumina ($Al_2O_3$) in the cryolite bath which constitutes the electrolyte in the cells used for the production or primary aluminum, characterized in that said process comprises the following steps:

    A. Drawing a sample of the molten cryolite bath from the electrolytic cell by means of a probe of a type known from the prior art, or another equivalent means;

    B. cooling said sample down to a temperature lower than 100°C and finely grinding and homogenizing it;

    C. drawing an exactly metered amount by means of a volumetric measurement or by weighing said ground and homogenized sample;

    D. mixing said metered amount of said sample with an approximately equal amount of a finely ground, carbon-based material selected from the group comprising graphite and coal, with said carbon-based material being free, and kept free, from oxygen and/or products containing oxygen in any forms or combinations;

    E. heating said metered amount of said sample in mixture with said carbon-based material inside a perfectly sealed chamber rigorously free from oxygen and/or products containing oxygen in any forms or combinations, up to a temperature of at least 2050°C, collecting and cooling the generated gases and separating, by means of suitable filters of chemical and/or physical type, of types known from the prior art, the solid and/or condensed particles and any fluorinated gases possibly contained in said developed gases;

    F. conveying said generated and filtered gases to a suitable carbon monoxide (CO) detecting apparatus and quantitatively determining of said CO content in said gases.

2. Process according to claim 1 characterized in that said quantitative determination of carbon monoxide CO is carried out by means of an I.R. detector.

3. Process according to claim 1 characterized in that said fluorinated gases are separated by absorption on NaOH.

4. Process according to claim 1 characterized in that said metered amount of said sample according to the (C) step is of the order of some grams, and is preferably comprised within the range of from 0.5 to 3 g of said ground and homogenized sample.

5. Process according to claim 1 characterized in that it is carried out in continuous by means of an apparatus installed in the nearby of the electrolytic cell and directly connected both with the alumina feeding devices and with the devices for controlling the anodic distance, so as to accomplish, with the aid of a suitable processor and according to a preset programme, the automation of the electrolytic process.

European
Patent Office

EUROPEAN SEARCH
REPORT

Application Number

EP 90 12 2613

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-273 277  (COMALCO LIMITED) <br> * the whole document * * | 1 | G 01 N 31/00 |

TECHNICAL FIELDS
SEARCHED (Int. Cl.5)

G 01 N

The present search report has been drawn up for all claims

| Place of search | Date of completion of search | Examiner |
|---|---|---|
| The Hague | 29 October 91 | BOSMA R.A.P. |